# EUROPEAN PATENT SPECIFICATION

(11) **EP 1 121 801 B1**
(45) Date of publication and mention of the grant of the patent: **26.09.2012**
(21) Application number: 99954834.0
(22) Date of filing: 13.10.1999
(51) Int. Cl.: H04N 5/445

(54) **METHOD AND APPARATUS FOR SELECTIVELY SUPPLYING ADVERTISING MESSAGES TO VIEWER TERMINALS**
VERFAHREN UND GERÄT ZUM SELEKTIVEN SENDEN VON WERBENACHRICHTEN AN SICHTGERÄTE
TECHNIQUE ET DISPOSITIF D'ACHEMINEMENT SELECTIF DE MESSAGES PUBLICITAIRES VERS DES TERMINAUX DE TELEVISION

(30) Priority: 13.10.1998 US 104008 P; 30.11.1998 US 110301 P
(43) Date of publication of application: 08.08.2001
(60) Divisional application: 11177576.3
(73) Proprietor: Index Systems Inc, Santa Clara, CA 95050 (US)
(72) Inventor: YUEN, Henry, C., Pasadena, CA 91102-0438 (US)
(74) Representative: Kinsler, Maureen Catherine
(86) International application number: PCT/US1999/023649
(87) International publication number: WO 2000/022818

(56) References cited:
- WO-A-97/17774
- WO-A-98/27723
- US-A- 5 907 323
- US-A- 5 940 073

## Description

### CROSS-REFERENCE TO RELATED APPLICATIONS

This application claims priority of U.S. Application Nos. 60/104.008. filed on October 13, 1998 and 60/110,301, filed on November 30, 1998.

### BACKGROUND OF THE INVENTION

This invention relates to an on screen interactive electronic program guide (EPG) with advertising messages and, more particularly, to selectively supplying advertising messages to a viewer terminal for use in an EPG.

It is known to display static advertising messages in graphic or textual form in designated areas of an EPG. These advertisements are typically transmitted with the EPG data to user terminals, e.g., television receivers, and displayed on the monitor at the terminal simultaneously with television program listings. It has long been known that targeting advertisements to recipients who have a particular interest in the subject matter of the advertisements is more effective that sending advertisements to the public at large without regard for the background or interests of the recipients.

Published international patent application WO 98/27723, published on 25 June 1998 (25.06.1998), describes such an EPG with advertisements, the advertisements being selected according to the time of day of transmission and thus, to some extent, being directed to the interests of the viewers.

### SUMMARY OF THE INVENTION

According to one aspect of the invention, advertisements are targeted to television viewers that have a television receiver and a television screen. An EPG is displayed on the television screen. Use of the receiver and/or the EPG is monitored to develop a viewer profile based on viewer selections. A plurality of advertisements are transmitted with a television signal to the receiver. Fewer than all the transmitted advertisements are selectively stored at the receiver, depending on the viewer profile. One or more of the stored advertisements are displayed on the screen to match the viewer profile. Preferably, the stored advertisements are displayed on the screen simultaneously with the EPG.

Another aspect of the invention is to use the data base from which the EPG is generated as a source of information to develop the viewer profile, maintaining the viewer profile in a secure file at the receiver.

Another aspect of the invention is to maintain all or part of the viewer profile in a secure file at the viewer's receiver.

### BRIEF DESCRIPTION OF THE DRAWINGS

FIG.1 is a schematic block diagram of a television transmitter for practicing the invention;
FIG. 2 is a diagram that depicts advertisements telecast by the transmitter of FIG. 1;
FIG. 3 is a schematic block diagram of a television receiver for practicing the invention;
FIG. 4 depicts a typical EPG screen on a televison monitor at the receiver of FIG. 3; and
FIGS. 5 to 8 depict the organization of a typical EPG data base used to create viewer preference profiles.

### DETAILED DESCRIPTION OF THE INVENTION

In accordance with this invention, coded advertising messages or graphics for display in panel advertisements or banner advertisements in the body of an EPG are created at a television broadcast transmitter, the headend of a cable network, or other television signal source. The codes identify the types or class of advertisements, e. g., sports equipment, clothing, automobiles, restaurants, etc. The advertisements are telecast with the television signal to user terminals that have television receivers, i.e., cable converters, VCRs, and television receivers.

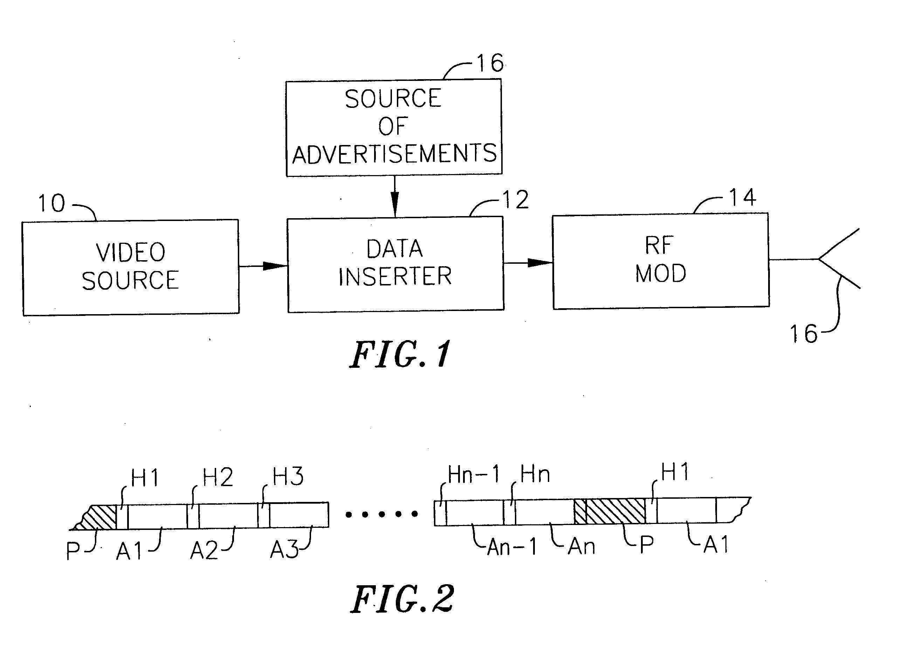

In FIG. 1 a broadcast television transmitter has a video source 10 that is coupled by a data inserter 12 to a radio frequency modulator (RF MOD) 14. A source 16 of advertisements in digital form is fed to data inserter 12 to embed the advertisements in a baseband television signal from source 10. If the television signal is analog, the advertisements are preferably embedded in its VBI. If the television signal is digital, the advertisements are preferably embedded in its digital video stream in packet form. RF MOD 14 up-converts the television signal and feeds the resulting RF signal to an antenna 16, which broadcasts the television signal to a plurality of television receivers. Alternatively, the advertisements could be inserted into the television signal of one or more channels at the headend of a cable or satellite system.

FIG. 2 illustrates the advertisements embedded in the television signal as a function of time from left to right. Advertisements A1, A2, A3, ..., An-1, An are repeatedly transmitted, separated by intervals P in carousel fashion. The intervals P could range from zero to 24 hours. The codes that identify the types or classes of advertisements are carried by headers H1, H2, H3, ..., Hn-1, Hn, which precede the respective advertisements A1, A2, A3, ..., An-1, An.

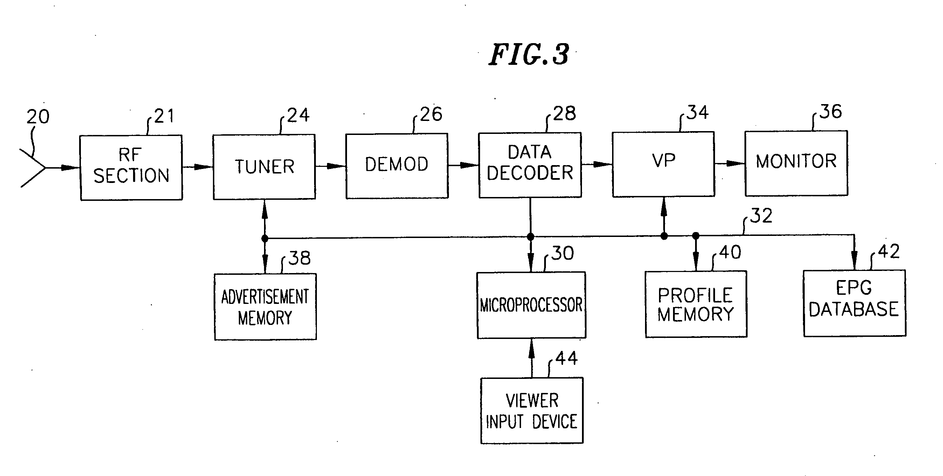

In FIG. 3. one of the plurality of receivers has an antenna 20 for intercepting the television signal with embedded advertisements. Antenna 20 is coupled by a radio frequency (RF) section 22 to a tuner 24, which selects the channel for reception. Tuner 24 is coupled by a demodulator (DEMOD) 26 to a data decoder 28, which recovers the advertisements from the television signal. If the television signal is analog, decoder 28 would conventionally be a VBI decoder. The recovered advertisements with their codes are transmitted to a microprocessor (µP) 30 on a bus 32. Commands are coupled by bus 32 from microprocessor 30 to tuner 24 to change channels at the desired times. The television signal is fed through decoder 28 to a video processor 34. Video processor 34 drives a television monitor 36. The images displayed on the screen of monitor 36, which are described below, are composed in video processor 34. Reference is made to PCT International Applications WO 96/07270 and WO 99/04561, published on March 7, 1996 and January 28, 1999, respectively, for a description of video processor 30 including a PIP chip with which it functions. (The sound producing components of the receiver are not described in detail.) An advertisement memory 38, a profile memory 40, and an EPG data base memory 42 are coupled by bus 32 to microprocessor 30 for bilateral data exchange. Although they are depicted as separate components, two or more of memories 38, 40, and 42 could be incorporated into a single RAM chip for convenience. Data and commands are also coupled by bus 32 to video processor 34 for its operation. A viewer input device 44 such as an IR remote controller issues commands to microprocessor 44 to operate the described receiver.

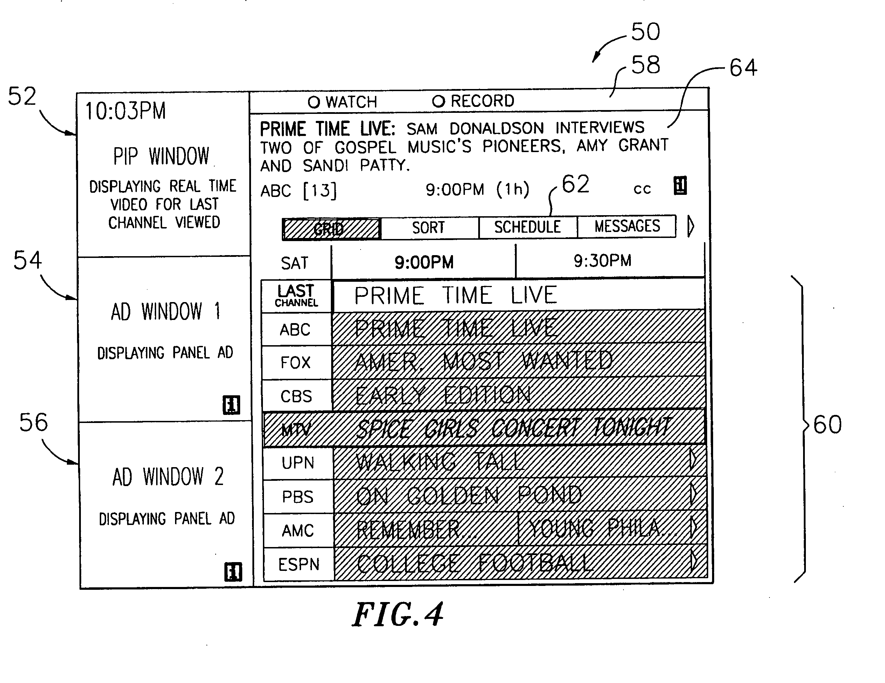

In FIG. 4, a typical EPG screen 50 generated by video processor 34 under control of microprocessor 30 is shown. Screen 50 is divided into a number of different display areas. A real time video area 52, a panel ad area 54, and a panel ad arca 56 are arranged along the left side of screen 50. Video area 52 is typically produced by a PIP chip. A banner area 58 lies at the top of screen 10 adjacent to area 52. A program listing area 60 occupies the bottom two thirds of screen 50 to the right of areas 52, 54, and 56. Above area 60 lies a horizontally extending menu bar area 62 by which the viewer can select among a number of different functions. Between banner area 58 and menu bar area 62 lies a detail area 64. The use and operation of EPG screen 50 is described in PCT International Application WO 99/04561, published on January 28, 1999.

The EPG data base for generating the program listings displayed on screen 50 (FIG. 4) is stored in memory 42. This data base is updated regularly, in well known fashion, for example by new EPG data downloaded in the VBI of the television signal under the control of microprocessor 30. Microprocessor 30 could set tuner 24 to the channel that carries the EPG data base at a predetermined time and then coordinate the storage of the data in memory 42.

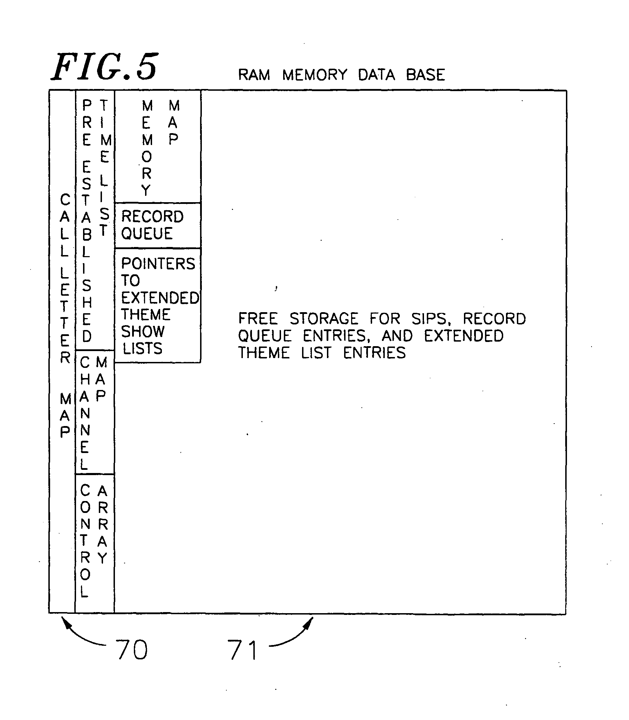

FIG. 5 depicts the program schedule memory data base. Static area 70 contains among other items a pre-established time list. This structure will be described in greater detail below. Dynamic area 71 is used to store television program schedule data. This data takes the form of show information packages (SIPs) and extended theme show list entries. These structures are also described more fully below.

Television program data is received in download packets. The download packets are sent over the VBI and received by microprocessor 24 as described with reference to FIG. 20. A download packet contains television program schedule information along with routing data that enables the system to determine how to store the information in memory.

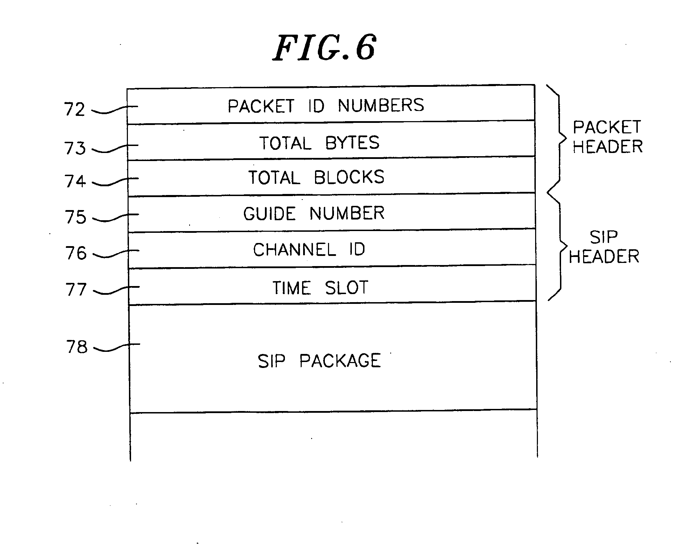

FIG. 6 illustrates a download packet. The packet begins with a packet header containing packet ID number 72 used to distinguish this packet from other packets. The packet header also contains number of bytes 73 and number of blocks 74. These values are used to determine the size of the packet.

The packet header is followed by the show information package (SIP) header. There is a show information package header for each show information package in the packet. The SIP header contains: guide number 75 used to determine the internal channel number of the data in the show information package; channel ID 76 used to determine the source of the data in the show information package; and time slot 77 used to designate the time and day of the data in the show information package. A show information package 78 follows the SIP header.

Upon receipt, the system microprocessor extracts a show information package from the download packet and temporarily stores it in program schedule memory. The show information package contains a date field that is used to determine if the data is for the current day (today) or the next day(tomorrow).

If the package falls within this two day window the system determines if the data is duplicative of existing data. The show information package contains a version number used to determine if the data is new or if it already exists in memory. If the data is new then it is stored and the address of the show information package is placed in the appropriate pointer in the pre-established time list. The pre-established time list will be explained more fully below.

If the show information package is outside of the current two-day window (today and tomorrow)and the show information package contains programs that have theme information, those programs with theme information are pulled out of the show information package and placed in the appropriate extended theme show list. The extended theme show list is described more fully below. If the show information package is outside of the current two-day window and does not contain theme information, or if the show information package is duplicative of one that is already stored the entire show information package is discarded.

Data in the program schedule memory is stored in data structures that enable the system to interpret the data. Several of the data structures are of fixed length and reside in the static area 70. Other data structures are of variable length and reside in the dynamic area 71. The fixed data structures include: the pre-established time list, the channel map, the control array, the call letter map, the memory map and the record queue. The variable data structures include: show information packages and extended theme show lists.

The pre-established time list is used to locate television program information for each channel in the system. The pre-established time list only references program information that will be broadcast on the current day (today) or on the next day (tomorrow). The pre-established time list references data through the use of pointers which are pieces of data that contain addresses of desired data items.

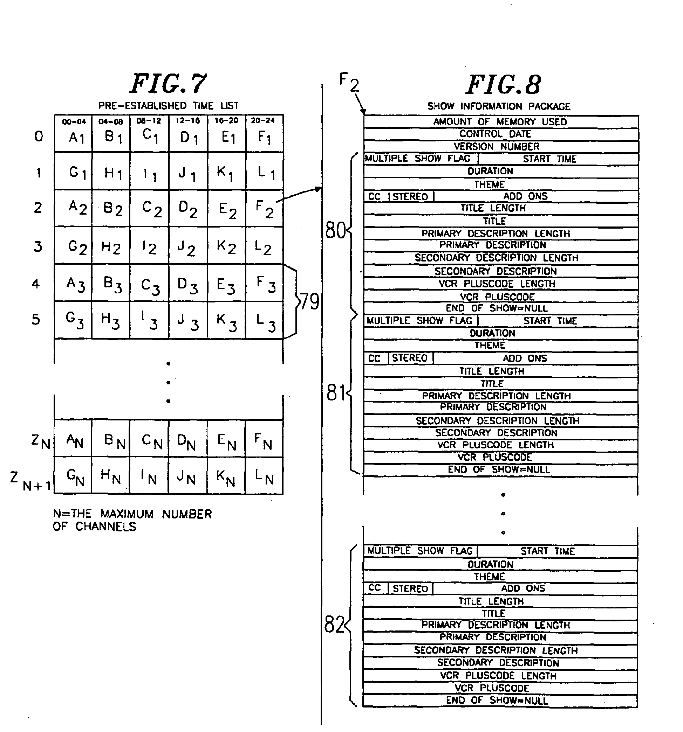

FIG. 7 illustrates the pre-established time list. The pre-established time list contains a set of twelve pointers 41 for each channel in the system. Each pointer corresponds to a show information package that contains data for a four hour block of television programming. For example, in FIG. 7, the pointer E1 corresponds to program data from four p.m. to eight p.m. Twelve pointers represent 24 hours of programming information for the current day and 24 hours of program information for the next day.

Referring to FIG. 8, pointers A2 through L2 are used to represent the program data associated with the second channel in the system. Each pointer contains an address of a show information package of variable length containing actual television program data. When specific data is needed, microprocessor 30 first looks in the pre-established time list to secure the pointer, then uses the address found in that location to determine where the data is actually stored. For example if data for the second channel in the system is needed for a television program between eight p.m. and twelve midnight the system will use the address in pointer F2 to determine the location of the show information package containing the data.

Show information packages are variable length data structures that contain actual television program schedule data. Each show information package contains data for a four hour block of television programming for a specific channel. The show information package length is variable because the number of shows in each four hour block will depend on the durations of the individual shows.

FIG. 8 depicts a show information package. A show information package contains the following: amount of memory - used to determine how much space was used to store the show information package and therefore, how much space is freed up after the show information package is no longer needed; control date - used to determine whether the data in a specific show information package is for the current day, the next day, or outside of the current two-day window; and version number used to specify the specific version of the program data..

Following these three fields is specific data for each show that fits within the four-hour time block. For a given show, represented by block 80, the following fields are present in the show information package: multiple show flag field - used to determine if this show is the last show within the package, or if there are other shows following to be processed; start time field - an offset from the start time of the four-hour block, this offset is added to the time of the four-hour block to determine the start time of the show; duration field - specifies the air time for the particular show; theme field - contains information on the type of show; for example, the show may be a sporting event, a news program, or a movie; CC field determines whether or not the show is closed captioned; stereo field - determines whether or not the show is broadcast in stereo; add-ons field - is a field left for expansion, this field will contain more information about the show as that information becomes standard in the art.

Following these fields are fields representing program title, primary description - a short description of the program, secondary description - a longer description of the program and VCR+ PLUSCODE. Each of these items are represented by two fields, one containing the length of a specific item, such as title length, and one containing the item itself, such as title.

Following this information is an end-of-show field. The end-of-show field is used to indicate that the information for that particular show is finished. A show information package may contain information for one or more shows depending on how many shows are broadcast within the four hour block. The presence of multiple shows is represented by 81 and 82.

A show information package is structured so as to provide several unique features for storing data. The title length, primary description length, secondary description length and VCR+ PLUSCODE length fields can be expanded for values that are beyond the maximum value that can be stored within one byte. For example, referring to FIG. 27, if the secondary description length is greater than the maximum value that can be stored within one byte, the length byte is set to the maximum value. The system then assumes that the following byte is also a length byte and adds the two values to determine the length of the secondary description. In this way, a show information package can dynamically allocate space to accommodate longer descriptions or longer titles.

The end-of-show field allows for the inclusion of data in the show information package that is not read by the current version of the system. As shown again in FIG. 27, following the VCR+ PLUSCODE field, there are two fields of unspecified data. This is data which may be read by future versions of the system but is currently not processed by the current system. When processing show information package data the system will discard this data until it reads an end-of-show field. The system will not begin processing data for a new show until an end-of-show field is found. This feature allows the system to access the same data as a potential future version which may incorporate more data.

At each user terminal, the usage of the user terminal, i.e. which programs are watched, how often, and for how long, or the usage of the EPG, i.e., which programs are selected for scheduling to record, to watch or to display more details, or which programs are highlighted with the cursor and how often, is monitored and processed by microprocessor 30 to create a viewer preference profile. This profile is maintained, i.e., stored, in memory 40 as a secure file at each user terminal to preserve viewer privacy. Thus, unauthorized parties do not have access to the profile. In other words, the viewer preference profile cannot be uploaded to another location such as a service center, a headend, or an Internet website.

Alternatively, only part of the user profile, namely, the privacy-sensitive part, e.g., the user name, is retained as a secure file, and other commercially useful anonymous marketing information about usage is transmitted to a remote processing center via telephone line, pager, the Internet etc. for analysis.

In addition to its normal function of providing the information to generate the displayed program listings, the EPG data base is also preferably used as a source of information to generate the viewer preference profiles at the viewer terminal as described below. As a result, the privacy of the data about viewer watching habits is not compromised by sending it to a remote location.

By way of example, the microprocessor could monitor the setting of tuner 24 and keep a log of the time, day, and duration that the tuner is set at each channel and program category designators could be stored in the EPG data base as part of the information about each program. The actual programs or program titles or program category designators could be identified from the time, day, and duration of the tuner by use of the EPG data base resident in the user terminal. Each time tuner 24 is reset, the channel and time could be used by microprocessor 30 to access the show information package (SIP) for the program being telecast on the channel at that time via the time-channel table and the corresponding pointer. The category of the program used to generate the category program guides could be recovered from the SIP by microprocessor 30 for use in formulating the viewer profile. Each time tuner 24 is reset the time interval since the last tuner reset is used by microprocessor 30 with the category of the program telecast on that channel during the interval to generate an accumulated value of viewing time of programs in that category. Thus, memory 40 can tally all the viewing time of the categories in this way to provide a viewer profile. If desired, specially tailored program categories different from those used to generate the category program guides could be stored in the SIP's to focus more precisely on viewer interests in selecting suitable advertisements for display.

In the case of the data base structure described above, microprocessor 30 is programmed to obtain the pointer to the desired SIP from the pre-established time list based on time as read from a real time clock and channel as read from the tuner. Microprocessor 30 then reads the category from the SIP for the time and channel.

Instead of monitoring tuner 24, the program categories could be transmitted in the VBI of each program itself in real time much as XDS or parental control ratings. However, this requires the cooperation of the television signal provider to accomplish.

The profile at a user terminal is correlated with the transmitted advertisement codes in headers H1, H2, H3, ..., Hn-1, Hn, so microprocessor 30 can earmark the transmitted advertisements A1, A2, A3, ..., An-1, An-2 that would be of greatest interest to a person represented by the stored profile file. For example, as described above, in a simple correlation scheme, the same codes used for the advertisements could also be assigned to the television programs and stored in the EPG data base. The user profile could represent the highest code count of the television programs or the two highest code counts, etc.

More sophisticated correlation schemes such as that disclosed in application No. 60/110,301 could also be employed. To conserve local memory space, part of the processing could be performed at a central location, if privacy is not a concern.

As an advertisement is received at a user terminal, its code is compared with the user profile. (In the simply correlation scheme described above, the advertisement code is directly compared with the code or codes of the profile.) If a match is detected, the advertisement is stored in memory 38 for later display in area 54 and/or 56 of the television screen in the EPG (FIG. 4). If the code of the advertisement indicates that the advertisement is not of interest, the advertisement is not stored in memory 38. This conserves memory space in the user terminal. Preferably, a number of advertisements so pinpointed to the user's interest, as reflected by the profile, are stored and and accessed in rotation for display in the EPG according to a prescribed schedule as described in application No. 60/141/331, filed on June 28, 1999.

Although it is preferable to transmit the advertisements and their codes with a television signal, they could alternatively be transmitted in a separate link, such as a pager channel or over the Internet.

The invention does not depend on the way the profile is developed. The profile could be generated by answers to a series of questions, directly by user input of a code, or by monitoring other operations that reflect user interests such as Internet use.

## Claims

1. A method of targeting advertisements to television viewers that have a television receiver and a television screen, the method comprising the steps of:
displaying an EPG on the television screen;
monitoring use of the receiver to develop a viewer profile based on viewer selections at the receiver;
transmitting a plurality of advertisements with a television signal to the receiver;
selectively storing fewer than all the transmitted advertisements at the receiver depending on the viewer profile; and
displaying one or more of the stored advertisements on the screen.

2. The method of claim 1, in which the stored advertisements are displayed on the screen simultaneously with the EPG.

3. The method of claim 1, in which the transmitted advertisements are embedded in a television signal.

4. The method of claim 3, in which the television signal is in analog form with a VBI and the transmitted advertisements are embedded in the VBI

5. The method of claim 3, in which the television signal is formatted as a digital video stream and the transmitted advertisements are embedded in the video stream.

6. The method of claim 1, additionally comprising the step of maintaining the viewer profile in a secure file at the receiver.

7. The method of claim 1, additionally comprising the step of storing an EPG data base at the receiver, the EPG data base including time, channel, and program category identifiers of telecast television programs; and the monitoring step retrieves the program categories of telecast television programs selected by the viewer for display on the screen from the EPG data base by addressing the time and channel of such selected television programs.

8. The method of claim 7, in which the monitoring step additionally records the time that programs in each category are displayed and the storing step stores an advertisement that matches the category having the longest recorded time.

9. The method of claim 7, in which the EPG displaying step uses the same program category identifiers to compile category program guides.

10. The method of claim 7, in which the EPG displaying step uses different program category identifiers to compile category program guides.

11. The method of claim 1, in which the monitoring step monitors the television channel to which the receiver is tuned.

12. The method of claim 1, additionally comprising the step of storing an EPG data base at the receiver, the EPG data base including time, channel, and program category identifiers of telecast television programs; the television receiver has a tuner and a real time clock; and the monitoring step records the channel to which the tuner is set and the time of the clock each time the tuner is re-set and retrieves the program categories of telecast television programs from EPG data base with the recorded times and channels.

13. The method of claim 1, additionally comprising the step of storing an EPG data base at the receiver, the EPG data base including time, channel, and program category identifiers of telecast television programs; the EPG displaying step permits viewers to highlight displayed program listings to initiate other action; and the monitoring step retrieves the program categories of telecast television programs selected by the viewer for display on the screen from the EPG data base by addressing the time and channel of such selected television programs.

14. The method of claim 13, in which the monitoring step counts by category the number of times the other action is initiated.

15. A system for targeting advertisements to television viewers that have a television receiver and a television screen, the system comprising:
means for displaying an EPG on the television screen;
means for monitoring use of the receiver to develop a viewer profile based on viewer selections at the receiver;
means for transmitting a plurality of advertisements with a television signal to the receiver;
means for selectively storing fewer than all the transmitted advertisements at the receiver depending on the viewer profile; and
means for displaying one or more of the stored advertisements on the screen.

16. A method of targeting advertisements to television viewers that have a television receiver and a television screen, the method comprising the steps of:
displaying an EPG on the television screen;
monitoring use of the receiver to develop a viewer profile based on viewer selections at the receiver;
transmitting a plurality of advertisements with a television signal to the receiver;
selectively displaying on the television screen fewer than all the transmitted advertisements at the receiver depending on the viewer profile.

17. A system for targeting advertisements to television viewers that have a television receiver and a television screen, the system comprising:
means for displaying an EPG on the television screen;
means for monitoring use of the receiver to develop a viewer profile based on viewer selections at the receiver;
means for transmitting a plurality of advertisements with a television signal to the receiver;
means for selectively displaying on the television screen fewer than all the transmitted advertisements at the receiver depending on the viewer profile.

18. The method of claim 1 further comprising storing the user profile in a secure file from which data cannot be accessed from outside the television receiver.

19. The method of 1 further comprising storing the user profile in a secure file from which only anonymous data can be accessed from outside the television receiver.

20. The method of claim 19 wherein the anonymous data is accessed from outside the television receiver by any one of the group of telephone, wireless telephone, pager, computer network and the Internet.

21. The system of claim 15 further comprising means for storing the user profile in a secure profile, wherein data in the secure file cannot be accessed from outside the television receiver.

22. The system of claim 15 further comprising means for storing the user profile in a secure profile, wherein only anonymous data in the secure file can be accessed from outside the television receiver.

23. The system of claim 22 further comprising means for accessing the secure file through any one of the group of telephone, wireless telephone, pager, computer network and the Internet.

24. The method of claim 16 further comprising storing the user profile in a secure file from which data cannot be accessed from outside the television receiver.

25. The method of claim 16 further comprising storing the user profile in a secure file from which only anonymous data can be accessed from outside the television receiver.

26. The method of claim 17 further comprising means for storing the user profile in a secure profile, wherein data in the secure file cannot be accessed from outside the television receiver.

27. The method of claim 17 further comprising means for storing the user profile in a secure profile, wherein only anonymous data in the secure file can be accessed from outside the television receiver.

## Patentansprüche

1. Verfahren zum zielgerichteten Platzieren von Werbungen an Fernsehzuschauer, die einen Fernsehempfänger und einem Fernsehbildschirm haben, welches Verfahren die folgenden Schritte umfasst:
Anzeigen eines elektronischen Programmführers (EPG) auf dem Fernsehbildschirm;
Überwachen der Verwendung des Empfängers, um ein Zuschauerprofil auf Basis von Zuschauerselektionen am Empfänger zu entwickeln;
Senden einer Mehrzahl von Werbungen mit einem Fernsehsignal an den Empfänger;
selektives Speichern von weniger als allen gesendeten Werbungen am Empfänger je nach Zuschauerprofil; und
Anzeigen von einer oder mehr gespeicherten Werbung(en) auf dem Bildschirm.

2. Verfahren nach Anspruch 1, bei welchem die gespeicherten Werbungen gleichzeitig mit dem EPG auf dem Bildschirm angezeigt werden.

3. Verfahren nach Anspruch 1, bei welchem die gesendeten Werbungen in einem Fernsehsignal eingebettet werden.

4. Verfahren nach Anspruch 3, bei welchem das Fernsehsignal in Analogform mit einem vertikalen Austastintervall (VBI) vorliegt und die gesendeten Werbungen in dem VBI eingebettet werden.

5. Verfahren nach Anspruch 3, bei welchem das Fernsehsignal als digitaler Videostream formattiert wird und die gesendeten Werbungen in dem Videostream eingebettet werden.

6. Verfahren nach Anspruch 1, weiters umfassend den Schritt des Aufbewahrens des Zuschauerprofils in einer sicheren Datei am Empfänger.

7. Verfahren nach Anspruch 1, weiters umfassend den Schritt des Speicherns einer EPG-Datenbank am Empfänger, welche EPG-Datenbank Zeit-, Kanal- und Programmkategoriekennungen von im Fernsehen gezeigten Fernsehprogrammen enthält; und wobei der Überwachungsschritt die Programmkategorien von im Fernsehen gezeigten Fernsehprogrammen, welche vom Zuschauer zur Anzeige auf dem Bildschirm aus der EPG-Datenbank ausgewählt wurden, durch Adressieren der Zeit und des Kanals solcher ausgewählter Fernsehprogramme wiedergewinnt.

8. Verfahren nach Anspruch 7, bei welchem der Überwachungsschritt darüber hinaus die Zeit aufzeichnet, während welcher Programme in jeder Kategorie angezeigt werden, und der Speicherschritt eine Werbung speichert, die mit der Kategorie mit der längsten aufgezeichneten Zeit übereinstimmt.

9. Verfahren nach Anspruch 7, bei welchem der EPG-Anzeigeschritt dieselben Programmkategoriekennungen verwendet, um Kategorieprogrammführer zu kompilieren.

10. Verfahren nach Anspruch 7, bei welchem der EPG-Anzeigeschritt verschiedene Programmkategoriekennungen verwendet, um Kategorieprogrammführer zu kompilieren.

11. Verfahren nach Anspruch 1, bei welchem der Überwachungsschritt den Fernsehkanal überwacht, auf den der Empfänger eingestellt ist.

12. Verfahren nach Anspruch 1, weiters umfassend den Schritt des Speicherns einer EPG-Datenbank am Empfänger, welche EPG-Datenbank Zeit-, Kanal- und Programmkategoriekennungen von im Fernsehen gezeigten Fernsehprogrammen enthält; wobei der Fernsehempfänger einen Tuner und eine Echtzeituhr aufweist; und wobei der Überwachungsschritt den Kanal, auf welchen der Tuner eingestellt ist, und die Uhrzeit, zu welcher der Tuner jedes Mal neu eingestellt wird, aufzeichnet und die Programmkategorien von im Fernsehen gezeigten Fernsehprogrammen aus der EPG-Datenbank mit den aufgezeichneten Zeiten und Kanälen wiedergewinnt.

13. Verfahren nach Anspruch 1, weiters umfassend den Schritt des Speicherns einer EPG-Datenbank am Empfänger, welche EPG-Datenbank Zeit-, Kanal- und Programmkategoriekennungen von im Fernsehen gezeigten Fernsehprogrammen enthält; wobei der EPG-Anzeigeschritt Fernsehzuschauern gestattet, angezeigte Programmlistings hervorzuheben, um eine andere Aktion zu initiieren; und wobei der Überwachungsschritt die Programmkategorien von im Fernsehen gezeigten Fernsehprogrammen, welche vom Zuschauer zur Anzeige auf dem Bildschirm aus der EPG-Datenbank ausgewählt wurden, durch Adressieren der Zeit und des Kanals solcher ausgewählter Fernsehprogramme wiedergewinnt.

14. Verfahren nach Anspruch 13, bei welchem der Überwachungsschritt pro Kategorie zählt, wie oft die andere Aktion initiiert wird.

15. System zum zielgerichteten Platzieren von Werbungen an Fernsehzuschauer, die einen Fernsehempfänger und einem Fernsehbildschirm haben, welches System aufweist:
Mittel zum Anzeigen eines EPGs auf dem Fernsehbildschirm;
Mittel zum Überwachen der Verwendung des Empfängers, um ein Zuschauerprofil auf Basis von Zuschauerselektionen am Empfänger zu entwickeln;
Mittel zum Senden einer Mehrzahl von Werbungen mit einem Fernsehsignal an den Empfänger;
Mittel zum selektiven Speichern von weniger als allen gesendeten Werbungen am Empfänger je nach Zuschauerprofil; und
Mittel zum Anzeigen von einer oder mehr gespeicherten Werbung(en) auf dem Bildschirm.

16. Verfahren zum zielgerichteten Platzieren von Werbungen an Fernsehzuschauer, die einen Fernsehempfänger und einem Fernsehbildschirm haben, welches Verfahren die folgenden Schritte umfasst:
Anzeigen eines EPGs auf dem Fernsehbildschirm;
Überwachen der Verwendung des Empfängers, um ein Zuschauerprofil auf Basis von Zuschauerselektionen am Empfänger zu entwickeln;
Senden einer Mehrzahl von Werbungen mit einem Fernsehsignal an den Empfänger;
selektives Anzeigen von weniger als allen an den Empfänger gesendeten Werbungen am Fernsehbildschirm je nach Zuschauerprofil.

17. System zum zielgerichteten Platzieren von Werbung an Fernsehzuschauer, die einen Fernsehempfänger und einem Fernsehbildschirm haben, welches System aufweist:
Mittel zum Anzeigen eines EPGs auf dem Fernsehbildschirm;
Mittel zum Überwachen der Verwendung des Empfängers, um ein Zuschauerprofil auf Basis von Zuschauerselektionen am Empfänger zu entwickeln;
Mittel zum Senden einer Mehrzahl von Werbungen mit einem Fernsehsignal an dem Empfänger;
Mittel zum selektiven Anzeigen von weniger als allen an den Empfänger gesendeten Werbungen am Fernsehbildschirm je nach Zuschauerprofil.

18. Verfahren nach Anspruch 1, weiters umfassend das Speichern des Benutzerprofils in einer sicheren Datei, bei welcher von außerhalb des Fernsehempfängers auf keine Daten zugegriffen werden kann.

19. Verfahren nach Anspruch 1, weiters umfassend das Speichern des Benutzerprofils in einer sicheren Datei, bei welcher von außerhalb des Fernsehempfängers nur auf anonyme Daten zugegriffen werden kann.

20. Verfahren nach Anspruch 19, wobei von außerhalb des Fernsehempfängers auf die anonymen Daten von irgendeinem aus der Gruppe Telefon, Funktelefon, Pager, Computernetzwerk und Internet zugegriffen wird.

21. System nach Anspruch 15, weiters mit Mitteln zum Speichern des Zuschauerprofils in einer sicheren Datei, wobei von außerhalb des Fernsehempfängers auf keine Daten in der sicheren Datei zugegriffen werden kann.

22. System nach Anspruch 15, weiters mit Mitteln zum Speichern des Zuschauerprofils in einer sicheren Datei, wobei von außerhalb des Fernsehempfängers nur auf anonyme Daten in der sicheren Datei zugegriffen werden kann.

23. System nach Anspruch 22, weiters mit Mitteln zum Zugreifen auf die sichere Datei durch irgendeines aus der Gruppe Telefon, Funktelefon, Pager, Computernetzwerk und Internet.

24. Verfahren nach Anspruch 16, weiters umfassend das Speichern des Benutzerprofils in einer sicheren Datei, bei welcher von außerhalb des Fernsehempfängers auf keine Daten zugegriffen werden kann.

25. Verfahren nach Anspruch 16, weiters umfassend das Speichern des Benutzerprofils in einer sicheren Datei, bei welcher von außerhalb des Fernsehempfängers nur auf anonyme Daten zugegriffen werden kann.

26. System nach Anspruch 17, weiters mit Mitteln zum Speichern des Zuschauerprofils in einer sicheren Datei, wobei von außerhalb des Fernsehempfängers auf keine Daten in der sicheren Datei zugegriffen werden kann.

27. System nach Anspruch 17, weiters mit Mitteln zum Speichern des Zuschauerprofils in einer sicheren Datei, wobei von außerhalb des Fernsehempfängers nur auf anonyme Daten in der sicheren Datei zugegriffen werden kann.

## Revendications

1. Procédé de ciblage de messages publicitaires vers des téléspectateurs qui possèdent un récepteur de télévision et un écran de télévision, le procédé comprenant les étapes de :
l'affichage d'un EPG sur l'écran de télévision ;
la surveillance de l'utilisation du récepteur pour développer un profil de téléspectateur, en fonction de sélections par le téléspectateur, dans le récepteur ;
la transmission d'une pluralité de messages publicitaires, avec un signal de télévision, au récepteur ;
le stockage sélectif d'une quantité inférieure à la totalité des messages publicitaires transmis dans le récepteur en fonction du profil de téléspectateur ; et
l'affichage d'un ou de plusieurs des messages publicitaires stockés sur l'écran.

2. Procédé selon la revendication 1, dans lequel les messages publicitaires stockés sont affichés sur l'écran simultanément avec l'EPG.

3. Procédé selon la revendication 1, dans lequel les messages publicitaires transmis sont incorporés dans un signal de télévision.

4. Procédé selon la revendication 3, dans lequel le signal de télévision est sous forme analogue avec un VBI et les messages publicitaires transmis sont incorporés dans le VBI.

5. Procédé selon la revendication 3, dans lequel le signal de télévision est formaté sous forme de flux vidéo numérique et les messages publicitaires transmis sont incorporés dans le flux vidéo.

6. Procédé selon la revendication 1, comprenant en outre l'étape de maintien du profil de téléspectateur dans un fichier sécurisé dans le récepteur.

7. Procédé selon la revendication 1, comprenant en outre l'étape de stockage d'une base de données d'EPG dans le récepteur, la base de données d'EPG comprenant des identifiants de temps, de chaîne et de catégorie d'émission de d'émissions de télévision télédiffusées ; et l'étape de surveillance récupère les catégories d'émission de d'émissions de télévision télédiffusées sélectionnées par le téléspectateur pour l'affichage sur l'écran à partir de la base de données d'EPG en adressant le temps et la chaîne de telles émissions de télévision sélectionnées.

8. Procédé selon la revendication 7, dans lequel l'étape de surveillance enregistre en outre le temps durant lequel des émissions dans chaque catégorie sont affichées et l'étape de stockage stocke un message publicitaire qui correspond à la catégorie présentant le temps enregistré le plus long.

9. Procédé selon la revendication 7, dans lequel l'étape d'affichage d'EPG utilise les mêmes identifiants de catégorie d'émission pour établir des programmes d'émissions de catégorie.

10. Procédé selon la revendication 7, dans lequel l'étape d'affichage d'EPG utilise différents identifiants de catégorie d'émission pour établir des programmes d'émissions de catégorie.

11. Procédé selon la revendication 1, dans lequel l'étape de surveillance surveille la chaîne de télévision sur laquelle le récepteur est syntonisé.

12. Procédé selon la revendication 1, comprenant en outre l'étape de stockage d'une base de données d'EPG dans le récepteur, la base de données d'EPG comprenant des identifiants de temps, de chaîne et de catégorie d'émission de d'émissions de télévision télédiffusées ; le récepteur de télévision comporte un syntoniseur et une horloge temps réel ; et l'étape de surveillance enregistre la chaîne sur laquelle le syntoniseur est réglé et le temps de l'horloge à chaque fois que le syntoniseur est réglé à nouveau et récupère les catégories d'émission d'émissions de télévision télédiffusées à partir de la base de données d'EPG avec les temps et les chaînes enregistrés.

13. Procédé selon la revendication 1, comprenant en outre l'étape de stockage d'une base de données d'EPG dans le récepteur, la base de données d'EPG comprenant des identifiants de temps, de chaîne et de catégorie d'émission de d'émissions de télévision télédiffusées ; l'étape d'affichage d'EPG permet à des téléspectateurs de mettre en évidence des listages d'émissions affichées pour commencer une autre action ; et l'étape de surveillance récupère les catégories d'émission d'émissions de télévision télédiffusées sélectionnées par le téléspectateur pour l'affichage sur l'écran à partir de la base de données d'EPG en adressant le temps et la chaîne de telles émissions de télévision sélectionnées.

14. Procédé selon la revendication 13, dans lequel l'étape de surveillance compte, par catégorie, le nombre de fois que l'autre action est commencée.

15. Système pour cibler des messages publicitaires vers des téléspectateurs qui possèdent un récepteur de télévision et un écran de télévision, le système comprenant :
des moyens pour afficher un EPG sur l'écran de télévision ;
des moyens pour surveiller l'utilisation du récepteur pour développer un profil de téléspectateur, en fonction de sélections par le téléspectateur, dans le récepteur ;
des moyens pour transmettre une pluralité de messages publicitaires, avec un signal de télévision, au récepteur ;
des moyens pour stocker sélectivement une quantité inférieure à la totalité des messages publicitaires transmis dans le récepteur en fonction du profil de téléspectateur ; et
des moyens pour afficher un ou plusieurs des messages publicitaires stockés sur l'écran.

16. Procédé de ciblage de messages publicitaires vers des téléspectateurs qui possèdent un récepteur de télévision et un écran de télévision, le procédé comprenant les étapes de :
l'affichage d'un EPG sur l'écran de télévision ;
la surveillance de l'utilisation du récepteur pour développer un profil de téléspectateur, en fonction de sélections par le téléspectateur, dans le récepteur ;
la transmission d'une pluralité de messages publicitaires, avec un signal de télévision, au récepteur ;
l'affichage sélectif, sur l'écran de télévision, d'une quantité inférieure à la totalité des messages publicitaires transmis dans le récepteur en fonction du profil de téléspectateur.

17. Système pour cibler des messages publicitaires vers des téléspectateurs qui possèdent un récepteur de télévision et un écran de télévision, le système comprenant :
des moyens pour afficher un EPG sur l'écran de télévision ;
des moyens pour surveiller l'utilisation du récepteur pour développer un profil de téléspectateur, en fonction de sélections par le téléspectateur, dans le récepteur ;
des moyens pour transmettre une pluralité de messages publicitaires, avec un signal de télévision, au récepteur ;
des moyens pour afficher sélectivement, sur l'écran de télévision, une quantité inférieure à la totalité des messages publicitaires transmis dans le récepteur en fonction du profil de téléspectateur.

18. Procédé selon la revendication 1, comprenant en outre le stockage du profil d'utilisateur dans un fichier sécurisé à partir duquel l'accès à des données est impossible à partir de l'extérieur du récepteur de télévision.

19. Procédé selon la revendication 1, comprenant en outre le stockage du profil d'utilisateur dans un fichier sécurisé à partir duquel seul l'accès à des données anonymes est possible à partir de l'extérieur du récepteur de télévision.

20. Procédé selon la revendication 19, dans lequel l'accès aux données anonymes est possible à partir de l'extérieur du récepteur de télévision par un élément quelconque parmi le groupe suivant : téléphone, téléphone sans fil, radiomessageur, réseau informatique et Internet.

21. Système selon la revendication 15, comprenant en outre des moyens pour stocker le profil d'utilisateur dans un profil sécurisé, dans lequel l'accès à des données dans le fichier sécurisé est impossible à partir de l'extérieur du récepteur de télévision.

22. Système selon la revendication 15, comprenant en outre des moyens pour stocker le profil d'utilisateur dans un profil sécurisé, dans lequel seul l'accès à des données anonymes dans le fichier sécurisé est possible à partir de l'extérieur du récepteur de télévision.

23. Système selon la revendication 22, comprenant en outre des moyens pour accéder au fichier sécurisé par l'intermédiaire d'un élément quelconque parmi le groupe suivant : téléphone, téléphone sans fil, radiomessageur, réseau informatique et Internet.

24. Procédé selon la revendication 16, comprenant en outre le stockage du profil d'utilisateur dans un fichier sécurisé à partir duquel l'accès à des données est impossible à partir de l'extérieur du récepteur de télévision.

25. Procédé selon la revendication 16, comprenant en outre le stockage du profil d'utilisateur dans un fichier sécurisé à partir duquel seul l'accès à des données anonymes est possible à partir de l'extérieur du récepteur de télévision.

26. Procédé selon la revendication 17, comprenant en outre des moyens pour stocker le profil d'utilisateur dans un profil sécurisé, dans lequel l'accès à des données dans le fichier sécurisé est impossible à partir de l'extérieur du récepteur de télévision.

27. Procédé selon la revendication 17, comprenant en outre des moyens pour stocker le profil d'utilisateur dans un profil sécurisé, dans lequel seul l'accès à des données anonymes dans le fichier sécurisé est possible à partir de l'extérieur du récepteur de télévision.
